# EUROPÄISCHE PATENTSCHRIFT

(11) **EP 1 876 063 B1**
(45) Veröffentlichungstag und Bekanntmachung des Hinweises auf die Patenterteilung: **25.11.2009**
(21) Anmeldenummer: 07012927.5
(22) Anmeldetag: 02.07.2007
(51) Int. Cl.: B60R 9/10

(54) **Trageinrichtung für ein Fahrrad**
Carrying device for a bicycle
Dispositif de support pour un vélo

(30) Priorität: 08.07.2006 DE 102006031689
(43) Veröffentlichungstag der Anmeldung: 09.01.2008
(73) Patentinhaber: Magna Car Top Systems GmbH, 74321 Bietigheim-Bissingen (DE)
(72) Erfinder: Bergerhoff, Harald, 22143 Hamburg (DE); Waller, Michael, 22549 Hamburg (DE); Hahn, Gerald, 21255 Wistedt (DE)

(56) Entgegenhaltungen:
- EP-A1- 0 820 902
- DE-A1- 19 826 077
- DE-U1- 29 916 746
- US-A1- 2005 061 842

## Beschreibung

Die Erfindung bezieht sich auf eine Trageinrichtung für ein Fahrrad zum Transport in einem Kraftfahrzeug, vorzugsweise Personenkraftwagen nach dem Oberbegriff des Patentanspruchs 1.

Aus der DE 699 21 413 T2 geht eine Klemmvorrichtung für ein Fahrrad eines Kraftfahrzeug-Fahrradträgers hervor, die einen aufrechten Ständer umfasst. Der Ständer ist mit Klemmmitteln eines Rohrrahmenabschnitts des Fahrradrahmens versehen und mit einem Querrahmen versehen, der ein Mittelrohr besitzt, in das teleskopierbare Seitenrohre eingesetzt sind. Freie Enden der Seitenrohre sind mit Stützen für ein Vorderrad und ein Hinterrad des Fahrrads versehen; die Stützen sind durch die teleskopierbaren Rohre an die das jeweilige Hinterrad bzw. Vorderrad anpassbar. Das Vorderrad und das Hinterrad sind mit Halteschlaufen an den Stützen der Seitenrohre festgesetzt. Damit die Seitenrohre im Mittelrohr in der jeweiligen Lage gehalten werden sind Fixierungsvorrichtungen vorgesehen, die als Spannschrauben ausgebildet sind.

In der FR 1 518 528 wird ein Fahrradträger für Automobile behandelt, der auf dem Dach dieses Automobils befestigt ist. Der Fahrradträger ist mit Längsträgen versehen, der eine Stütze für den Fahrradrahmen und Aufnahmen für ein Vorderrad und ein Hinterrad aufweisen. Die Aufnahmen sind als Rohrabschnitte ausgebildet, die den als Rohrelement ausgeführten Längsträger umgeben und in Längsrichtung des Rohrelements zur Anpassung an verschiedene Radstände unterschiedlicher Fahrräder verschiebbar sind.

EP 0 820 902 A offenbart eine Trageinrichtung mit den Merkmalen des Oberbegriffs des Anspruchs 1.

Es ist Aufgabe der Erfindung eine Trageinrichtung für ein Fahrrad zum Transport mit einem Kraftfahrzeug zu schaffen, bei die Halteträgerabschnitte eines Halteträgers auf einfache Weise an ein Vorderrad bzw. ein Hinterrad eines zu befördernden Fahrrads angepasst werden können. Dabei sollte aber auch sichergestellt werden, dass Fixierungselemente, mit denen die Halteträgerabschnitte am Halteträger festsetzbar sind, sich durch leichte Bedienbarkeit und sichere Funktion auszeichnen.

Erfindungsgemäß wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind drin zu sehen, dass die Halterträgerabschnitte des Halteträgers der Trageinrichtung dank der Fixierungselemente mit dem mit Federn belasteten Sperrgliedern und den vorbildlich arbeitenden Betätigungsmechanismen eine funktionsgerechte und bequeme Einstellbarkeit der Halteträgerabschnitte relativ zum jeweiligen Fahrrad ermöglicht. Dabei ist jedes Sperrglied eines Fixierungselements als ein leicht umsetzbares Druckstück ausgeführt, das vorzüglich mit der Abstützwand des Halterträgerabschnitts zusammenwirkt und auf der der Abstützwand zugekehrten Seite mit einem reibungserhöhenden Reibbelag versehen sein kann. Das Federelement sucht das Druckstück des in eine Sperrstellung zu bewegen, was sich konstruktiv problemlos umsetzen lässt, wie auch im übrigen das Federelement, das eine aufwandarmes Maschinenelement darstellt. Der Betätigungsmechanismus mit dem Betätigungszapfen und dem Handhebel ist eine Vorrichtung, die mit vertretbarem technischem Aufwand, realisiert werden kann. Schließlich ist es möglich, das Sperrglied mit Betätigungsmechanismus und Handhebel räumlich günstig in die Trageinrichtung zu integrieren.

In der Zeichnung wird ein Ausführungsbeispiel der Erfindung gezeigt, das nachstehend näher beschrieben ist.

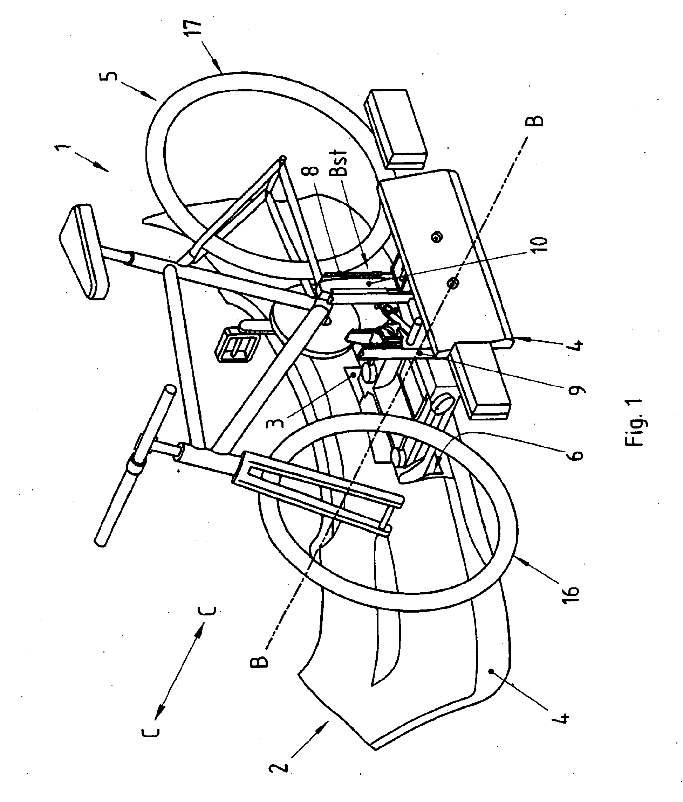

Es zeigen
Fig. 1 eine Schrägansicht auf einen Personenkraftwagen von hinten links oben,
Fig. 2 eine Schrägansicht einer Trageinrichtung für ein Fahrrad des Personenkraftwagens von hinten links oben,

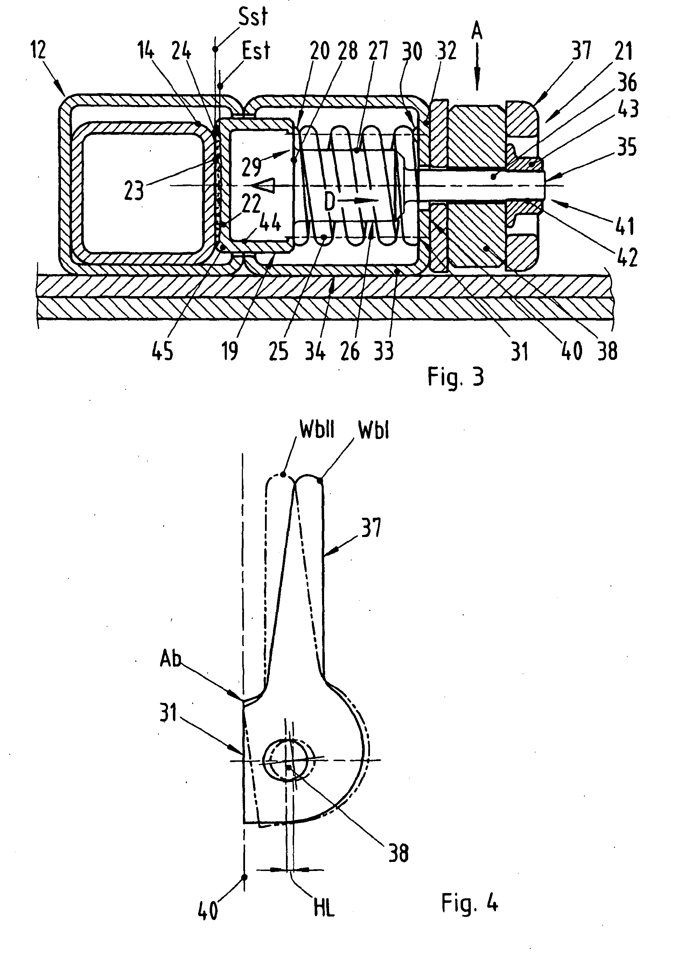

Fig. 3 einen Schnitt nach der Linie III-III der Fig. 2 in größerem Maßstab,
Fig. 4 eine schematische Ansicht in Pfeilrichtung A der Fig. 3.

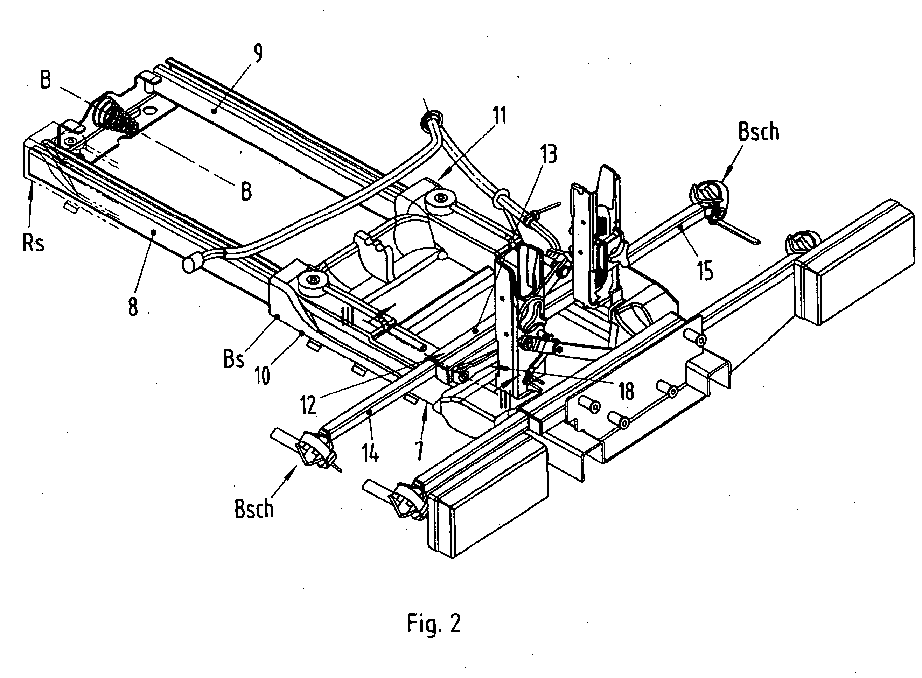

Von einem Personenkraftwagen 1 ist lediglich ein Heckteil 2 dargestellt, das in einer Mittellängsebene B-B -Fig. 2- eine Öffnung 3 zum Ausfahren einer Trageinrichtung 4 aufweist. Der Trageinrichtung 4 ist zum Transport eines Fahrrads 5 ausgebildet und umfasst einen Grundträger 6 und einen Aufnahmeträger 7 -Fig. 2-, an dem das quer zur Fahrzeuglängsrichtung C-C ausgerichtete Fahrrad 5 gehalten ist. Der Aufnahmeträger 7 ist in Fahrzeuglängsrichtung C-C gesehen aus einer Ruhestellung Rs und in eine Betriebsstellung Bs und vice versa verstellbar -Fig. 2-. Hierzu sind am Grundträger 6 beiderseits der Mittellängsebene B-B innere Führungsschienen 8 und 9 vorgesehen, die mit äußeren Führungsschienen 10 und 11 des Aufnahmeträgers 7 zusammenarbeiten.

Bestandteil der Trageinrichtung 4 ist ein Halteträger 12 für das Fahrrad 5, der an dem Aufnahmeträger 7 angeordnet ist und einen rohrförmiger Führungsträger 13 mit viereckigem Querschnitt und darin teleskopierbar gelagerten Halteträgerabschnitte 14 und 15; letztere sind nach Art eines Vierkantrohrs gestaltet. Die Haleträgerabschnitte 14 und 15 sind zur Befestigung eines Vorderrads 16 bzw. eines Hinterrads 17 des Fahrrads 5 ausgebildet und werden unter Vermittlung von Fixierungselementen 18 am Führungsträger 12 in Lage gehalten. Die Trageinrichtung 4 ist geeignet zwei etwa parallel verlaufende Fahrräder aufzunehmen, wobei im Folgenden lediglich der Halteträger 12 des Fahrrads 5 beschrieben wird. Das Vorderrad 16 und das Hinterrad 17 werden mitttels Befestigungsschlaufen Bsch gehalten, die an freien Enden der Halteträgerabschnitte 14 und 15 angebracht sind.

Jedes Fixierungselement 18 ist mit einem Sperrglied 19 versehen, das durch eine Federelement 20 belastet wird, dergestalt, dass der zugehörige Halteträgerabschnitt 14 relativ zum Halteträger 12 festgesetzt wird. Dabei ist das Sperrglied 19 mittels eines nach Art eines Schnellverschlusses aufgebauten Betätigungsmechanismus 21 in eine Sperrstellung Sst und eine Entriegelungsstellung Est bewegbar. Das Sperrglied 19 besitzt ein Druckstück 22, das mit einer Abstützwand 23 des Halteträgerabschnitts 14 durch Flächenpressung zusammenarbeitet. Das Druckstück 22 ist auf der der Abstützwand 23 zugekehrten Seite mit einem reibungserhöhenden Belag 24 versehen, der form- und/ oder stoffschlüssig mit dem Druckstück 22 verbunden ist. Das Federelement 20 wird durch eine Druckfeder 25 verkörpert und sucht das Druckstück 22 in die Sperrstellung Sst zu bewegen.

Der Betätigungsmechanismus 21 umfasst einen Betätigungszapfen 26, der mit einem Führungsabschnitt 27 für die Druckfeder 25 versehen ist, d.h. die Druckfeder 25 umgibt einen bolzenartigen Führungsabschnitt 27, an dem ein erster Anschlag 28 für eine erste Endseite 29 der Druckfeder 25 vorgesehen ist, wobei die Druckfeder 25 mit einer zweiten Endseite 30 sich an einer Innenseite 31 einer Anschlagwand 32 eines Gehäuseabschnitts 33 abstützt, der Teil eines unmittelbar an den Halteträger 12 herangeführten Rohrkörpers 34 ist. Der Betätigungszapfen 26 ist mit einem als Verlängerung 35 ausgestalteten Lagerbolzen 36 verbunden, der die Anschlagwand 32 durchdringt und mit einem Handhebel 37 in Wirkverbindung steht. Mit dem Handhebel 37 ist der Betätigungszapfen 26 in axialer Richtung D bewegbar, und zwar, um das Druckstück 22 bzw. das Sperrglied 19 gegen die Wirkung der Druckfeder 25 aus der Sperrstellung Spr in die Entriegelungsstellung Est zu bewegen.

Der Handhebel 37 ist am Lagerbolzen 36 unter Zwischenschaltung eines Achszapfen 38 gehalten, über den der Handhebel 36 Winkelbewegungen WbI bis WbII ausüben kann. Diese Winkelbewegungen WbI bis WbII bewirken Axialbewegungen des Betätigungszapfens 26 im Rahmen einer begrenzten Hublänge HI. Hierfür ist der Handhebel 37 mit einer Stützbahn 39 versehen, die mit einer Außenseite 40 der Anschlagwand 32 des Gehäuseabschnitts 33 in Kontaktberührung steht und durch ihre Abstützung bei As die Hublänge HL bewirkt. Die Stützbahn 39 ist im Ausführungsbeispiel als eine Gerade dargestellt, sie kann aber die Form einer Kurve aufweisen.

Der Lagerbolzen 36 besitzt an seinem freien Ende 41 ein Gewinde 42 für eine Schraubenmutter 43, die sich am Achszapfen 38 abstützt und den Handhebel 37 auf dem Betätigungszapfen 26 bzw. Lagerbolzen 36 in Lage hält. Der Betätigungszapfen 26 weist einen Aufnahmeabschnitt 44 für das Druckstück 21 auf, das einen letzteren umschließenden Querschnitt 45 bspw. U-förmiger Konfiguration umfasst und aus einem geeigneten Kunststoff bestehen kann.

## Patentansprüche

1. Trageinrichtung für ein Fahrrad on einem Kraftfahrzeug, vorzugsweise an einem Personenkraftwagen, die eine an einem Aufnahmeträger der Trageinrichtung vorgesehenen Halteträger aufweist, welcher Halteträger in einem Führungsträger teleskopierbare Halteträgerabschnitte für ein Vorderrad und ein Hinterrad des Fahrrads umfasst, die im rohrförmigen Halteträger gelagert und unter Vermittlung von Fixierungselementen in Lage gehalten werden, **dadurch gekennzeichnet, dass** jedes Fixierungselement (18) mit einem mittels eines Federelements (20) belasteten Sperrglied (19) einen Halteträgerabschnitt (14 oder 15) relativ zum Halteträger (12) festsetzt, wobei das Sperrglied (19) mit einem einen bewegbaren Handhebel (37) aufweisenden Betatigungsmechanismus (21) beeinflussbar ist, welches Sperrglied (19) ein Druckstück (22) umfasst, das unter Flächenpressung mit einer Abstützwand (23) des Halteträgerabschnits (14) zusammenarbeitet.

2. Trageinrichtung nach Anspruch 1, **dadurch gekennzeichnet, dass** des Druckstück (22) auf der der Abstützwand (23) zugekehrten Seite mit einem reibungserhöhenden Belag (24) versehen ist.

3. Trageinrichtung nach den Anspruch 1, **dadurch gekennzeichnet, dass** das Federelement (20) das Druckstück (22) des Sperrglieds in eine Sperrstellung (Sst) zu bewegen sucht.

4. Trageinrichtung nach Anspruch 3, **dadurch gekennzeichnet**, das Federelement (20) als Druckfeder (25) ausgeführt ist.

5. Trageinrichtung nach einem oder mehreren der vorangehenden Ansprüche, **dadurch gekennzeichnet, dass** der Betätigungsmechanismus (21) einen Betätigungszapfen (26) mit einem von der Druckfeder (25) umgebenen Führungsabschnitt (27) aufweist, der mit einem ersten Anschlag (28) für eine erste Endseite (29) der Druckfeder (25) versehen ist, welche Druckfeder (25) sich mit einer zweiten Endseite (30) an einer Innenseite (31) einer Anschlagwand (32) eines Gehäuseabschnitts (33) abstützt.

6. Trageinrichtung nach Anspruch 5, **dadurch gekennzeichnet, dass** ein als Verlängerung (35) des Betätigungszapfens (26) ausgeführter Lagerbolzen (36) die Anschlagwand (32) durchdringt und mit dem den Betätigungszapfen (26) in axialer Richtung (D) bewegbaren Handhebel (37) versehen ist.

7. Trageinrichtung nach Anspruch nach Anspruch 6, **dadurch gekennzeichnet, dass** der Handhebel (37) um einen quer zum Lagerbolzen (36) angeordneten Achszapfen (38) beweglich ist und mit einer axiale Hubbewegungen des Betätigungszapfens (26) bewirkenden Stützbahn (39) an der der Anschlagwand (40) des Gehäuseabschnitts (33) anliegt.

8. Trageinrichtung nach Anspruch 7, **dadurch gekennzeichnet, dass** der Lagerbolzen (36) an einem freien Ende (41) ein Gewinde (42) für eine Schraubenmutter (43) besitzt, über die der Handhebel (3) auf dem Betätigungszapfen (26) festgelegt wird.

9. Trageinrichtung nach den Ansprüchen 1 und 5, **dadurch gekennzeichnet, dass** der Gehäuseabschnitt (33) Teil eines Rohrkörpers (34) ist, der an den Halteträger (12) herangeführt ist.

10. Trageinrichtung nach Ansprüchen 3 und 5, **dadurch gekennzeichnet, dass** der Betätigungszapfen (26) einen Aufnahmeabschnitt (44) für das Druckstück (22) aufweist.

11. Trageinrichtung nach Anspruch 10, **dadurch gekennzeichnet, dass** das Druckstück (22) einen den Aufnahmeabschnitt (44) zumindest bereichsweise umschließenden Querschnitt (45) aufweist.

12. Trageinrichtung nach Anspruch 10, **dadurch gekennzeichnet, dass** das Druckstück (22) aus Kunststoff besteht.

## Claims

1. Carrying device for a bicycle on a motor vehicle, preferably on a passenger vehicle, said carrying device having a retaining carrier which is provided on a receiving carrier of the carrying device, which retaining carrier comprises, in a guide carrier, telescopic retaining carrier sections for a front wheel and a rear wheel of the bicycle, said retaining carrier sections being mounted in the tubular retaining carrier and being kept in position with the aid of fixing elements, **characterized in that** each fixing element (18) fixes one retaining carrier section (14 or 15) relative to the retaining carrier (12) with a locking member (19) which is loaded by means of a spring element (20), the locking member (19) being able to be influenced by an actuating mechanism (21) which has a movable hand lever (37), said locking member (19) comprising a pressure piece (22) which, under surface pressure, cooperates with a supporting wall (23) of the retaining carrier section (14).

2. Carrying device according to Claim 1, **characterized in that** the pressure piece (22) is provided with a friction-increasing coating (24) on the side facing the supporting wall (23).

3. Carrying device according to Claim 1, **characterized in that** the spring element (20) attempts to move the pressure piece (22) of the locking member into a locking position (Sst).

4. Carrying device according to Claim 3, **characterized in that** the spring element (20) is designed as a compression spring (25).

5. Carrying device according to one or more of the preceding claims, **characterized in that** the actuating mechanism (21) has an actuating pin (26) with a guide section (27) which is surrounded by the compression spring (25) and is provided with a first stop (28) for a first end side (29) of the compression spring (25), which compression spring (25) is supported by a second end side (30) on an inner side (31) of a stop wall (32) of a housing section (33).

6. Carrying device according to Claim 5, **characterized in that** a bearing bolt (36) which is designed as an extension (35) of the actuating pin (26) penetrates the stop wall (32) and is provided with the hand lever (37) which can move the actuating pin (26) in the axial direction (D).

7. Carrying device according to Claim 6, **characterized in that** the hand lever (37) is movable about a pivot (38) arranged transversely with respect to the bearing bolt (36), and, by means of a supporting track (39) which brings about axial lifting movements of the actuating pin (26), bears against the stop wall (40) of the housing section (33).

8. Carrying device according to Claim 7, **characterized in that** a free end (41) of the bearing bolt (36) has a thread (42) for a screw nut (43) via which the hand lever (3) is fixed on the actuating pin (26).

9. Carrying device according to Claims 1 and 5, **characterized in that** the housing section (33) is part of a tubular body (34) which is brought up to the retaining carrier (12).

10. Carrying device according to Claims 3 and 5, **characterized in that** the actuating pin (26) has a receiving section (44) for the pressure piece (22).

11. Carrying device according to Claim 10, **characterized in that** the pressure piece (22) has a cross section (45) surrounding at least some regions of the receiving section (44).

12. Carrying device according to Claim 10, **characterized in that** the pressure piece (22) is composed of plastic.

## Revendications

1. Dispositif de support pour un vélo placé sur un véhicule automobile, de préférence un véhicule de tourisme, ledit dispositif comportant un support de fixation prévu au niveau d'un support de logement du dispositif de support, ledit support de fixation comprenant dans un support de guidage des segments de support de fixation téléscopables conçus pour une roue avant et une roue arrière du vélo, lesdits segments étant disposés dans le support de fixation tubulaire et maintenus en place par l'intermédiaire d'éléments de fixation, **caractérisé en ce que** chaque élément de fixation (18) immobilise un segment de support de fixation (14 ou 15) par rapport au support de fixation (12) avec un élément de blocage (19) chargé au moyen d'un élément de ressort (20), l'élément de blocage (19) pouvant être influencé par un mécanisme d'actionnement (21) doté d'un levier manuel (37), ledit élément de blocage (19) comprenant une pièce compressible (22) collaborant avec une paroi de soutien (23) du segment de support d'arrêt (14) par le biais d'une compression superficielle.

2. Dispositif de support selon la revendication 1, **caractérisé en ce que** la pièce compressible (22) est pourvue d'un revêtement (24) augmentant les frottements sur le côté opposé à la paroi de soutien (23).

3. Dispositif de support selon la revendication 1, **caractérisé en ce que** l'élément de ressort (20) cherche à déplacer la pièce compressible (22) de l'élément de blocage dans une position de blocage (Sst).

4. Dispositif de support selon la revendication 3, **caractérisé en ce que** l'élément de ressort (20) prend la forme d'un ressort de compression (25).

5. Dispositif de support selon l'une quelconque des revendications précédentes ou plusieurs d'entre elles, **caractérisé en ce que** le mécanisme d'actionnement (21) comporte un tenon d'actionnement (26) pourvu d'un segment de guidage (27) entouré par le ressort de compression (25), ledit segment étant pourvu d'une première butée (28) prévue pour une première extrémité (29) du ressort de compression (25), ledit ressort de compression (25) appuyant avec une seconde extrémité (30) contre l'intérieur (31) d'une paroi de butée (32) d'un segment de boîtier (33).

6. Dispositif de support selon la revendication 5, **caractérisé en ce qu'**un boulon pivot (36) prenant la forme d'une extension (35) du tenon d'actionnement (26) pénètre la paroi de butée (32) et est pourvu du levier manuel (37) pouvant déplacer le tenon d'actionnement (26) dans la direction axiale (D).

7. Dispositif de support selon la revendication 6, **caractérisé en ce que** le levier manuel (37) est mobile autour d'un tenon axial (38) disposé perpendiculairement au boulon pivot (36) et pourvu d'une orbite de soutien (39) provoquant des mouvements de levée du tenon d'entraînement (26) et contre laquelle repose la paroi de butée (40) du segment de boîtier (33).

8. Dispositif de support selon la revendication 7, **caractérisé en ce que** le boulon pivot (36) est doté au niveau d'une extrémité libre (41) d'un filetage (42) pour un écrou de vis (43) via lequel le levier manuel (3) est immobilisé sur le tenon d'actionnement (26).

9. Dispositif de support selon les revendications 1 et 5, **caractérisé en ce que** le segment de boîtier (33) fait partie d'un corps tubulaire (34) introduit au niveau du support d'arrêt (12).

10. Dispositif de support selon les revendications 3 et 5, **caractérisé en ce que** le tenon d'entraînement (26) comporte un segment de logement (44) pour la pièce compressible (22).

11. Dispositif de support selon la revendication 10, **caractérisé en ce que** la pièce compressible (22) comporte une section transversale (45) entourant au moins en partie le segment de logement (44).

12. Dispositif de support selon la revendication 10, **caractérisé en ce que** la pièce compressible (22) est en matière synthétique.
